**Europäisches Patentamt**

**European Patent Office**

**Office européen des brevets**

(11) Veröffentlichungsnummer: **0 197 093 B1**

(12) **EUROPÄISCHE PATENTSCHRIFT**

(45) Veröffentlichungstag der Patentschrift: **20.05.92**

(51) Int. Cl.5: **G03B 27/73**

(21) Anmeldenummer: **85904968.6**

(22) Anmeldetag: **28.09.85**

(86) Internationale Anmeldenummer:
**PCT/EP85/00502**

(87) Internationale Veröffentlichungsnummer:
**WO 86/02175 (10.04.86 86/08)**

(54) **VERFAHREN UND VORRICHTUNG ZUM EICHEN EINES FOTOGRAFISCHEN FARBVERGRÖSSERUNGS- ODER KOPIERGERÄTES.**

(30) Priorität: **01.10.84 IT 487284**

(43) Veröffentlichungstag der Anmeldung:
**15.10.86 Patentblatt 86/42**

(45) Bekanntmachung des Hinweises auf die
Patenterteilung:
**20.05.92 Patentblatt 92/21**

(84) Benannte Vertragsstaaten:
**AT CH DE FR GB IT LI**

(56) Entgegenhaltungen:
**EP-A- 0 020 855**
**DE-A- 3 321 136**
**US-A- 4 174 173**

(73) Patentinhaber: **Durst Phototechnik GmbH**
**Postfach 223**
**I-39042 Brixen(IT)**

(72) Erfinder: **VINATZER, Alex**
**Angerweg 19**
**I-39042 Brixen/Milland(IT)**
Erfinder: **VIKOLER, Florian**
**Oswald v. Wolkensteinstr, 133**
**I-39042 Brixen(IT)**

## Beschreibung

### Technisches Gebiet

Die Erfindung bezieht sich allgemein auf das Gebiet der Farbbelichtung fotografischer Schichtträger bei der Herstellung von Abzügen oder Vergrößerungen von einem Filmoriginal und betrifft ein Verfahren und eine Vorrichtung zum Eichen eines Vergrößerungs- oder Kopiergerätes, wobei unter Eichen das Einstellen auf eine Grundeinstellung verstanden wird, die mit Bezug auf eine gegebene Film-Papierkombination optimale Belichtungsbedingungen für eine ausgewählte, eine mittlere Farb- und Helligkeitsverteilung aufweisende Filmbildvorlage ergibt.

### Zugrundeliegender Stand der Technik

Die Eichung eines Farbvergrößerungsgerätes mit Bezug auf eine gegebene Film-Papierkombination ist nicht ohne Schwierigkeit und erfordert einen erheblichen Aufwand an Zeit und Material, da in der Regel mehrere Versuche gemacht und eine Reihe von Probekopien angefertigt werden müssen.

Dabei wird üblicherweise so verfahren, daß zunächst in einer Probebelichtung von einer ausgewählten Eichvorlage eine erste Kopie erstellt und diese visuell beurteilt wird. Aus den Dichte- und/oder Farbfehlern, die eine solche Probekopie in der Regel aufweist, werden empirisch die erforderlichen Korrekturen bestimmt und die Einstellung des Vergrößerungsgerätes wird entsprechend nachgeführt. Der Vorgang wird so oft wiederholt, bis eine Probekopie die gewünschte Qualität aufweist und die Einstellung, die zu diesem Bildergebnis geführt hat, dient als Grundeinstellung des Vergrößerungsgerätes für die weiteren zu kopierenden Filmbildvorlagen.

Die Beurteilung der Probekopien und insbesondere die richtige Bewertung eventueller Farbanomalien im Hinblick auf die Bestimmung der Art und des Ausmaßes der erforderlichen Korrekturen erfordert ein hohes Maß an Erfahrung und es sind zumeist diverse Schritte notwendig, bis das gewünschte Ergebnis erzielt wird, welches zudem von der subjektiven Beurteilung einer Bedienungsperson abhängig ist.

Vorwiegend aus dem grafischen Bereich ist die Verwendung von sogenannten Densitometern für Farbdichtemessungen an Bildreproduktionen bekannt. Insbesondere sind Densitometer zur Messung von Farbabweichungen bezüglich einer Zielkopie bekannt, in denen vorgegebene Referenzwerte speicherbar sind und die Meßwerte als Abweichung von den gespeicherten Referenzwerten angezeigt werden. Derartige Densitometer sind jedoch relativ kompliziert in der Handhabung und außerdem wegen ihrer hohen Kosten für einen breiteren Einsatz im Amateurbereich ungeeignet. Im übrigen besteht die Schwierigkeit einer exakten Umsetzung der vom Densitometer angezeigten Meßwerte in eine entsprechende Korrektur der Belichtungszeit und/oder der Farbzusammensetzung des Kopierlichtes. Die Einstellregler zum Einstellen der Farbfilterung am Vergrößerungsgerät sind nämlich zumeist nicht in densitometrischen Einheiten graduiert und außerdem muß bei der Umsetzung die Steilheit (Gamma-Wert) des verwendeten Kopiermaterials berücksichtigt werden, so daß auch das Arbeiten mit derartigen Meßgeräten spezifische Erfahrung voraussetzt.

Aus der US-A-4 174 173 ist ein Verfahren zur Einstellung der Farbbalance in einem fotografischen Farbkopiergerät bekannt. Ausgehend von einer Referenzvorlage werden Dichtewerte einer Bezugskopie mit gemessenen Dichtewerten einer auf der Basis von LATD-Messungen der Referenzkopie erstellten Probekopie verglichen und in Abhängigkeit einer vorhandenen Abweichung modifizierte Belichtungszeiten errechnet. Zur Angleichung der modifizierten Belichtungszeiten an bestimmte vorgegebene Werte wird weiters die Farbzusammensetzung des Kopierlichtes durch teilweises Einführen subtraktiver Farbfilter in den Kopierstrahlengang verändert. Dabei werden laufend LATD-Messungen ausgeführt und in Abhängigkeit der Meßwerte neue Belichtungszeiten errechnet und sichtbar angezeigt, während eine Bedienungsperson unter Beobachtung der angezeigten Werte die Farbfilter bis zum Erreichen der vorgegebenen Belichtungszeit in jeder Grundfarbe nachführt.

Auch die DE-A-3 321 136 zeigt ein Farbkopiergerät mit einer Belichtungssteuerung, in welcher komplementärfarbige Verschlußfilter zur farbselektiven Belichtungsunterbrechung und Farbkompensationsfilter zur Beeinflussung der Farbzusammensetzung der Kopierlichtquelle vorgesehen sind. Für die Einstellung der Standard-Kopierbedingungen werden auch hier Dichtemeßwerte einer Probekopie mit denen einer Bezugs- oder Zielkopie verglichen, und aus einer vorhandenen Dichtedifferenz werden Korrekturwerte für die Belichtungszeit für jede einzelne Farbkomponente hergeleitet. Dabei erfolgt die Messung der Farbdichten der Probe- und der Bezugskopie direkt im Strahlengang des Kopierlichtes mit Meßlicht aus der Kopierlichtquelle. Dadurch erübrigt sich zwar eine Zuhilfenahme gerätefremder Densitometer für die Dichtemessung und entfällt die Übertragung externer Meßwerte auf die Belichtungssteuerung. Das Erfordernis einer exakten Dichtemessung und einer relativ aufwendigen Rechen- und Kontrolleinrichtung bleibt jedoch bestehen.

## Offenbarung der Erfindung

Die Aufgabe der Erfindung besteht darin, ein Verfahren und eine Vorrichtung zum Eichen eines Farbvergrößerungs- oder Kopiergerätes anzugeben, mit denen die Eichung aufgrund objektiver Messungen in einer geringen Anzahl von Schritten und ohne spezifische Erfahrung durchführbar ist, wobei die Vorrichtung einfach in der Handhabung und kostengünstig in der Herstellung sein soll. Das erfindungsgemäße Verfahren und die Vorrichtung, die diese Aufgabe lösen, weisen die im kennzeichnenden Teil der Ansprüche 1 und 7 angeführten Merkmale auf.

Dadurch, daß als Meßlicht Kopierlicht aus dem zu eichenden Vergrößerungsgerät benutzt wird, ist eine Veränderung der Intensität oder der Farbzusammensetzung des Kopierlichtes auf der Anzeigevorrichtung direkt wahrnehmbar, womit die Möglichkeit der direkten Umsetzung einer angezeigten Abweichung zwischen Probe- und Bezugskopie in eine Korrektur der Belichtungsbedingungen durch entsprechende Beeinflussung des Kopierlichtes geschaffen ist. Das Fehlen einer eigenen Meßlichtquelle macht die Meßvorrichtung besonders kostengünstig und ihre Kosten liegen entschieden unter jenen der bekannten Densitometer, die zumeist aufwendige Lichtquellen hoher Konstanz verwenden.

Die Verwendung einer Bezugskopie und die Durchführung der Messung als Vergleichsmessung zwischen Probe- und Bezugskopie bringt den weiteren Vorteil, daß keine hohen Anforderungen an die Signalkonstanz gestellt werden und hohe Zuverlässigkeit bei relativ geringem Schaltungsaufwand erzielt wird. Vorteilhafterweise ist die Bezugskopie austauschbar, damit durch geeignete Auswahl eine Anpassung hinsichtlich einer bevorzugten Bildqualität vorgenommen werden kann.

Durch die Wahl einer Meßstellung für die Probekopie, in welcher diese die Bezugskopie teilweise überdeckt, das heißt durch Festlegen eines bestimmten Verhältnisses der wirksamen Meßflächen von Probe- und Bezugskopie ist eine einfache Möglichkeit zur Berücksichtigung der Steilheit (Gamma-Wert) des verwendeten Kopiermaterials gegeben.

Das Verfahren und die Vorrichtung sind bei der Herstellung von Kopien sowohl von Negativ- als auch von Positivmaterial anwendbar, ohne daß eine Funktionsumschaltung in der Meßvorrichtung erforderlich ist; der Umkehrung der Vorzeichen in den Dichteänderungen wird auf einfache Weise Rechnung getragen, indem die Reihenfolge der Messung von Probe- und Bezugskopie umgekehrt wird.

Weitere Merkmale und Vorteile des erfindungsgemäßen Verfahrens und der Vorrichtung zur Durchführung dieses Verfahrens ergeben sich aus den Unteransprüchen in Verbindung mit der nachfolgenden Beschreibung eines bevorzugten Ausführungsbeispieles.

## Kurze Beschreibung der Zeichnungen

Die Erfindung wird im folgenden anhand der Figuren 1 bis 3 näher erläutert. Es zeigen:

Figur 1 - eine perspektivische Gesamtansicht der Meßvorrichtung;

Figur 2 - eine Ansicht im Schnitt der Vorrichtung gemäß Fig. 1;

Figur 3 - ein Prinzip-Schaltbild der Meßschaltung der Vorrichtung.

## Bevorzugte Ausführungsform der Erfindung

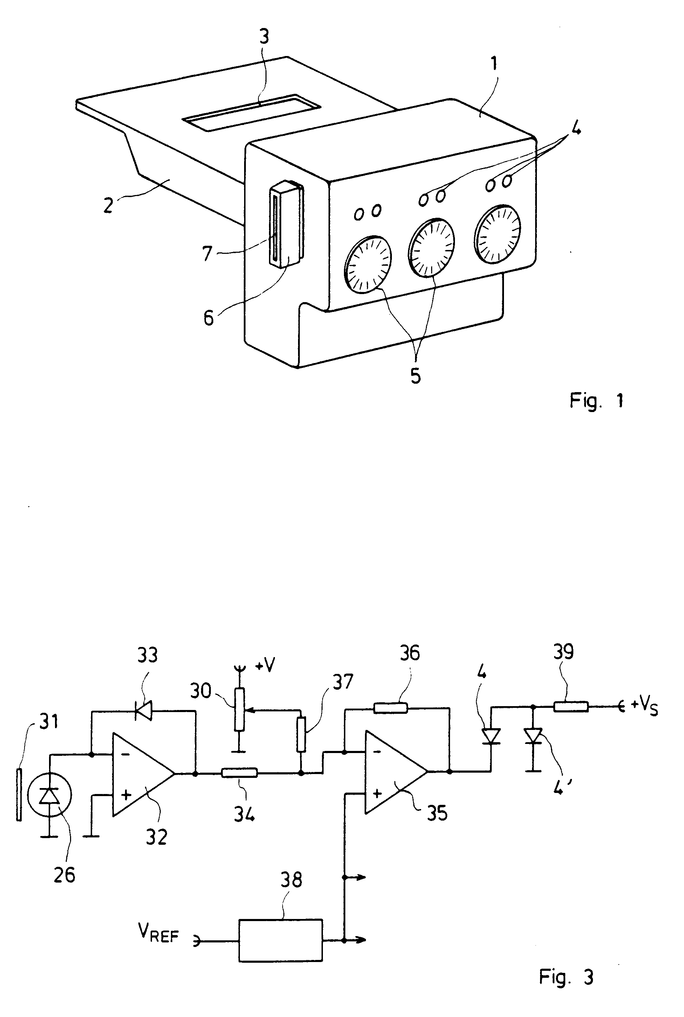

Figur 1 zeigt eine bevorzugte Ausführungsform der Meßvorrichtung gemäß der Erfindung. Diese umfaßt ein Gehäuse 1, das im wesentlichen der Aufnahme des Meßobjekts und der Bauteile einer Meßschaltung dient und an welches sich ein Lichtleitmittel 2 anschließt, das eine Lichteintrittsöffnung 3 aufweist. An der Frontseite des Gehäuses 1 befindet sich eine Reihe Anzeigeelemente, beispielsweise Lichtemissionsdioden 4, im folgenden kurz Leuchtdioden genannt, die räumlich paarweise Drehknöpfen 5 zugeordnet sind. Seitlich am Gehäuse 1 tritt das Kopfteil 6 eines Meßobjektträgers hervor, das einen Längsschlitz 7 zur Aufnahme von zu messenden Probestreifen aufweist, wie noch deutlicher beschrieben wird.

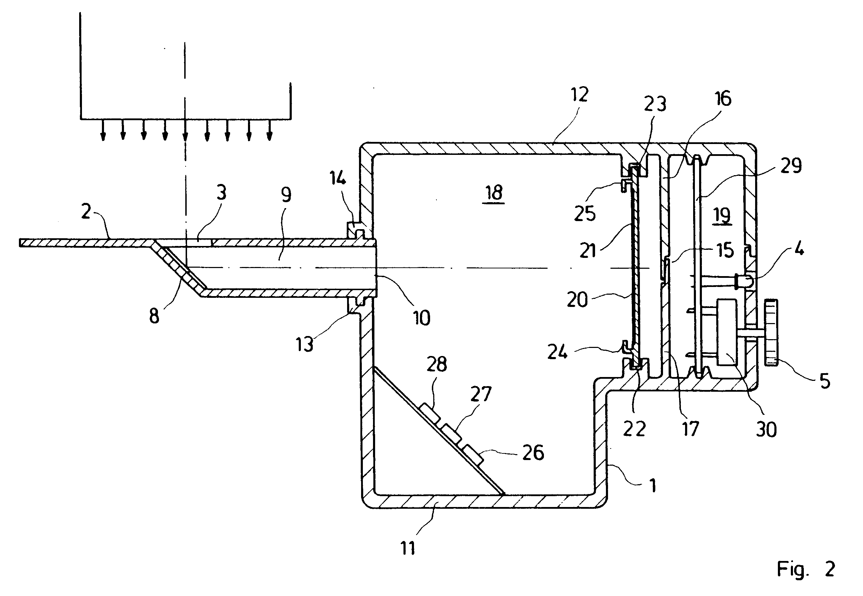

Der Wirkaufbau der Meßvorrichtung geht aus der Figur 2 hervor. Hinter der Eintrittsöffnung 3 des Lichtleitmittels 2 ist ein Spiegelelement 8 schräg angeordnet, welches einfallendes Licht in Richtung eines Lichtschachtes 9 reflektiert, der im wesentlichen rechteckigen Querschnitt hat und über eine Lichteintrittsöffnung 10 in das Gehäuse 1 mündet. Das Lichtleitmittel 2 ist im übrigen so ausgelegt, daß es in dem zur Aufnahme der Bildbühne bestimmten Raum eines Vergrößerungsgerätes Aufnahme findet, wo es bei der Messung anstelle der Bildbühne eingesetzt wird und über die Öffnung 3 Kopierlicht der Belichtungseinrichtung des Vergrößerungsgerätes empfängt.

Die mechanische Verbindung zwischen Lichtleitmittel 2 und Gehäuse 1 ist vorzugsweise so beschaffen, daß leichte Austauschbarkeit für Lichtleitmittel unterschiedlicher Form besteht. Im vorliegenden Ausführungsbeispiel ist das Gehäuse 1 von einem Unterteil 11 und einem Oberteil 12 gebildet, die durch geeignete Verbindungsmittel, beispielsweise eine Schraubverbindung (in der Zeichnung nicht dargestellt) zusammengehalten werden, wobei das Ende des Lichtschachtes 9 zwischen Greifrändern 13 und 14 des Unter- bzw. Oberteils gehalten wird. Eine Trennwand 15 besteht aus Teilwänden 16 und 17 und teilt das Innere des Gehäuses 1 in eine lichtdichte Meßkammer 18 und einen Raum 19, der die elektrischen Bauteile einer Meßschaltungsanordnung aufnimmt. Gegenüber der Lichteintrittsöffnung 10 des Gehäuses 1 ist in fixem Abstand davon ein Meßobjektträger in Form einer Trägerplatte 20 angeordnet. Die Platte ist in Führungen 22 und 23, die an gegenüberliegenden Wandungen der Meßkammer 18 angebracht sind, verschiebbar (in Richtung normal zur Zeichnungsebene) und aus dem Gehäuse herausnehmbar und weist ein Kopfteil 6 (siehe Fig.1) auf, das seitlich aus dem Gehäuse hervortritt. Die Trägerplatte 20 ist ihrerseits auf der der Lichtöffnung zugewandten Seite mit Führungsleisten 24 und 25 versehen, die der Aufnahme einer zu messenden Probekopie dienen, welche zur Messung durch den Längsschlitz 7 des Kopfteils 6 der Platte auf diese aufgeschoben wird (siehe auch Fig. 1). Vorzugsweise ist auf der Trägerplatte 20 eine Bezugskopie 21 fest angebracht, beispielsweise angeklebt, und wird eine zu messende Probekopie in Überlagerung der Bezugskopie auf die Platte geschoben. Vorteilhafterweise sind die Führungsleisten 24 und 25 mit einstellbaren Anschlägen ausgestattet, welche die Einfuhrtiefe der Probekopie begrenzen und damit den von ihr abgedeckten Anteil der Bezugsmeßfläche bestimmen.

Vor der Trägerplatte 20 jedoch außerhalb des Strahlenganges des auf die Meßfläche der Platte einfallenden Lichtes sind lichtempfindliche Elemente, beispielsweise Fotodioden 26, 27 und 28 angeordnet, die jeweils in einer der Grundfarben Rot, Grün und Blau sensibilisiert sind und von der Bezugskopie oder einer in die Meßebene eingebrachten Probekopie reflektiertes Licht empfangen. Die Fotodioden sind Teil einer Meßschaltung, mit welcher sie elektrisch verbunden sind; weitere Bauteile der Schaltung sind auf einer Leiterplatte 29 montiert, die im Raum 19 des Gehäuses untergebracht ist. In der Figur sind insbesondere sichtbar ein Speicherpotentiometer 30 und ein diesem zugeordneter Drehknopf 5, sowie eine Leuchtdiode 4 als von außen sichtbares Anzeigeelement.

Figur 3 zeigt das Prinzipschaltbild der Meßschaltung.Diese umfaßt einen gesonderten Meßkanal für jede der Grundfarben Rot, Grün und Blau des Meßlichtes. In der Figur ist nur einer der 3 Meßkanäle dargestellt, nachdem die beiden anderen mit diesem identisch sind. Mit Bezug auf den roten Meßkanal beispielsweise, ist die Fotodiode 26 mittels eines vorgesetzten Rotfilters 31 auf Rot sensibilisiert. (Analogerweise sind die Fotodioden 27, 28 der anderen Meßkanäle grün- bzw. blausensibilisiert).

Die Fotodiode 26 ist elektrisch mit dem invertierenden Eingang eines Operationsverstärkers 32 verbunden, dessen nicht-invertierender Eingang am Masse- bzw. Grundpotential der Schaltung liegt und der mittels einer Diode 33 im Rückkopplungszweig als logarithmischer Strom-Spannungswandler geschaltet ist, sodaß am Verstärkerausgang eine dem Logarithmus des Fotostroms der Diode 26 proportionale Spannung ansteht. Der Ausgang des Operationsverstärkers 32 ist über einen Widerstand 34 an den invertierenden Eingang eines zweiten Operationsverstärkers 35 angeschlossen, in dessen Rückkopplungszweig ein Widerstand 36 liegt, der zusammen mit dem Widerstand 34 die Verstärkung des Verstärkers 35 festlegt. Der Ausgangsspannung des Strom-Spannungswandlers ist eine veränderliche Spannung überlagert, die an einem zwischen Masse und einem fixen Potential + V liegenden Potentiometer 30 abgegriffen und über einen Widerstand 37 dem Eingang des zweiten Operationsverstärkers 35 zugeführt wird. Der nicht-invertierende Eingang dieses Operationsverstärkers ist über einen logarithmischen Wandler 38 mit einem vorgebbaren Bezugspotential $V_{REF}$ beaufschlagt, wodurch der Verstärker selbst die Funktion eines Spannungsvergleichers erfüllt. Der Bereich der am Potentiometer 30 abgreifbaren Spannung erfaßt die Spannweite der Signale am Ausgang des Verstärkers 32 und am Ausgang des Wandlers 38, sodaß für jeden auftretenden Wert dieser Signale die Signaldifferenz zwischen den beiden Eingängen des Vergleichers mit dem Potentiometer 30 auf Null einstellbar ist. Der logarithmische Wandler 38 ist allen drei Farbkanälen gemeinsam und sein Ausgang ist außer an den Operationsverstärker 35 an die entsprechenden Verstärker der anderen Meßkanäle geführt, sodaß alle ein gemeinsames Bezugspotential erhalten. Am Ausgang des Operationsverstärkers 35 liegen zwei in Reihe geschaltete Leuchtdioden 4 und 4', wobei die zweite an Masse liegt und der gemeinsame Anschlußpunkt über einen Vorwiderstand 39 aus einer Spannungsquelle $+V_s$ gespeist wird. Je nach Abweichung des Eingangssignals in die eine oder andere Richtung in bezug auf das Vergleichssignal nimmt der Ausgang des Verstärkers/Vergleichers Potentiale entgegengesetzter Polarität an, wodurch jeweils eine der beiden Dioden 4, 4' stromführend wird bzw. aufleuchtet; bei Gleichheit der Spannungen an den Verstärkereingängen führen beide Dioden gleichzeitig Strom bzw. leuchten beide Dioden gleichzeitig auf. Die Leuchtdioden 4 und 4' und die entsprechenden der anderen Farbkanäle liefern also eine sichtbare Anzeige für jede Abweichung des Meßsignals von einem als Bezug gewählten Vergleichssignal und zeigen durch gleichzeitiges Aufleuchten einen Zustand des Gleichgewichts an.

Die Wirkungsweise des erfindungsgemäßen Verfahrens unter Verwendung der beschriebenen Meßvorrichtung ist folgende: Als Hilfsmittel werden ein Eichnegativ mit einem Graufeld definierter mittlerer Dichte und eine Bezugskopie, welche eine befriedigende Reproduktion des Graufeldes des Eichnegativs darstellt, verwendet. Die Bezugskopie ist vorzugsweise an der Trägerplatte 20 fix angeordnet und erstreckt sich über die vom Meßlicht beleuchtete Meßfläche.

Zunächst wird mit dem zu eichenden Vergrößerungsgerät unter probeweise eingestellten Belichtungsbedingungen eine erste Probekopie des Eichnegativs belichtet und entwickelt. Alsdann wird das Lichtleitmittel der Meßvorrichtung anstelle der Bildbühne in den Kopierlichtweg des Vergrößerungsgerätes eingeführt, wodurch die Meßfläche der Trägerplatte in der Meßkammer vom Kopierlicht ausgeleuchtet wird. Als Bezugspotential $V_{REF}$ wird in dieser Meßphase vorteilhafterweise eine Spannung angelegt, welche proportional zur Belichtungszeit ist, mit der die Probekopie erstellt wurde und die beispielsweise einem Belichtungsschaltgerät entnommen werden kann. Nunmehr wird durch den Eingabeschlitz des Kopfteiles 6 der Trägerplatte ein Streifen der Probekopie in Überlagerung der an der Trägerplatte befestigten Bezugskopie in die Meßstellung geführt und werden die Potentiometer 30 eines jeden Farbkanals mittels der Drehknöpfe 5 bis zum gleichzeitigen Aufleuchten des Diodenpaares eines jeden Farbkanals eingeregelt. Auf diese Weise bleiben die auf die Probekopie bezogenen Meßwerte in jeder Grundfarbe in der von den einzelnen Potentiometern eingenommenen Regelstellung gespeichert. Nach diesem Abgleich wird die Probekopie aus der Meßstellung genommen, sodaß nun das Meßlicht von der vorhin verdeckt gebliebenen Bezugskopie reflektiert wird. Die Leuchtdioden bleiben nur dann weiterhin alle erleuchtet, wenn die Probekopie dieselbe Farbdichte aufweist, wie die Bezugskopie, was heißt, daß die Belichtungsbedingungen für die Probekopie bereits korrekt waren. Andernfalls zeigen die Leuchtdioden durch das Aufleuchten nur einer Diode des Diodenpaares in einem oder mehreren Farbkanälen eine Abweichung vom angestrebten Farbgleichgewicht an, welche durch Verändern der Belichtungsbedingungen auszugleichen ist. Dies wird erreicht, indem auf die Belichtungszeit und/oder die Filterung im Farbkopf des Vergrößerungsgerätes eingewirkt wird, bis das an den Leuchtdioden beobachtbare Gleichgewicht wieder hergestellt ist. Vorzugsweise wird dabei für den Abgleich im Rotkanal auf die im Belichtungsschaltgerät eingestellte Belichtungszeit eingewirkt, was einer Veränderung des Bezugspotentials $V_{REF}$ gleichkommt, und für den Abgleich im Grün- und Blaukanal das Magenta- bzw. Gelbfilter im Farbkopf nachgeführt. Das Vergrößerungsgerät ist geeicht, sobald im wesentlichen Übereinstimmung zwischen der letzterstellten Probekopie und der Bezugskopie besteht, was sich in einem gleichbleibenden Zustand des Gleichgewichts in der Messung der beiden ausdrückt.

Beim Umsetzen einer festgestellten Dichteabweichung zwischen Probekopie und Bezugskopie in die entsprechende Korrektur der Belichtungswerte muß auch die Steilheit (Gamma-Wert) des verwendeten Kopiermaterials berücksichtigt werden. In einer besonders vorteilhaften Anwendung des erfindungsgemäßen Verfahrens geschieht dies, indem die wirksamen Meßflächen der Bezugskopie und einer jeweiligen Probekopie in bestimmtem Größenverhältnis zueinander gewählt werden. Bei einem angenommenen Gamma-Wert von beispielsweise zwei ($\gamma = 2$) wird der Streifen der Probekopie nur so weit in die Meßstellung eingeschoben, daß er die Bezugskopie nur zur Hälfte abdeckt, sodaß ein Teil des von den Fotodioden empfangenen Meßlichts von dem unverdeckt gebliebenen Teil der Bezugskopie ausgeht. Vorzugseise ist der Probekopiestreifen bis zu einer in Abhängigkeit des Gamma-Wertes des verwendeten Kopiermaterials wählbaren Einfuhrtiefe einschiebbar.

Das beschriebene Eichverfahren ist mit den entsprechenden Anpassungen auch beim Kopieren von Diapositiven auf Umkehrmaterial anwendbar, wo dann anstelle des Eichnegativs ein Diapositiv mit einem Graufeld definierter mittlerer Dichte verwendet wird und die Farbdichtekorrekturen mit umgekehrten Vorzeichen zu erfolgen haben. Um aus der Anzeige der Leuchtdioden bzw. dem Aufleuchten der einen oder der anderen Diode eines Diodenpaares dennoch den richtigen Hinweis entnehmen zu können, in welche Richtung die Korrektur zu erfolgen hat, genügt es, die Reihenfolge der Messung von Probekopie und Bezugskopie umzukehren, wodurch die ermittelten Differenzwerte ebenfalls das Vorzeichen wechseln.

In der beschriebenen Ausführungsform der Meßvorrichtung ist das Lichtleitmittel so ausgelegt, daß es mit der Bildbühne im dafür vorgesehenen Raum des Vergrößerungsgerätes austauschbar ist, das heißt, das Meßlicht wird in der Vorlagenebene entnommen. Dies hat den Vorteil, daß die Messungen im Hellraum durchgeführt werden können. Im Rahmen der Erfindung sind aber auch andere Ausführungen möglich, wo das Meßlicht in unterschiedlichen Meßebenen entnommen wird, beispielsweise unmittelbar unterhalb des Objektivs oder in der Kopierebene des Vergrößerungsgerätes oder auch in der Lichtaustrittsebene eines Lichtmischschachtes in Richtung Stahlengang vor der Bildbühne. Im Falle daß das Meßlicht unterhalb des Objektivs oder in der Kopierebene entnommen wird, wird als Bezugspotential $V_{REF}$ anstelle eines von der Belichtungszeit abhängigen Potentials vorteilhafterweise ein dem eingestellten Blendenwert proportionales Potential gewählt.

**Patentansprüche**

1. Verfahren zum Bestimmen der Farbzusammensetzung des Kopierlichtes in fotografischen Vergrößerungs- oder Kopiergeräten mit Mitteln zum Einstellen der relativen Anteile der Grundfarben Rot, Grün und Blau des Kopierlichtes im Hinblick auf eine Belichtung mit einheitlicher Belichtungszeit in den Grundfarben, aufgrund der Meßergebnisse von einer Probekopie, die von einer Eichvorlage erstellt wird, und von einer Bezugskopie, die eine befriedigende Bildreproduktion der Eichvorlage darstellt, dadurch gekennzeichnet, daß
   - die Probekopie unter probeweise eingestellter Farbzusammensetzung des Kopierlichtes erstellt wird;
   - die Probekopie und die Bezugskopie mit dem durch die Einstellmittel beeinflußbaren Kopierlicht in der zum Belichten der Probekopie eingestellten Farbzusammensetzung ausgeleuchtet und das von der Probekopie und der Bezugskopie reflektierte Licht selektiv in den Farben Rot, Grün und Blau gemessen wird;
   - die Meßwerte der einen Kopie gespeichert und die der anderen mit den gespeicherten Meßwerten verglichen und eine vorhandene Abweichung einzeln für jede Farbe sichtbar angezeigt wird und
   - die Farbzusammensetzung des Kopierlichtes durch Verändern der relativen Anteile der Grundfarben Rot, Grün und Blau bis zum Ausgleich der angezeigten Abweichungen neu eingestellt wird.

2. Verfahren nach Anspruch 1, dadurch gekennzeichnet, daß Probekopie und Bezugskopie in aufeinanderfolgenden Messungen gemessen werden und die Meßwerte der ersten Messung gespeichert und jene der zweiten Messung als Abweichung von den gespeicherten Werten angezeigt werden.

3. Verfahren nach Anspruch 2, dadurch gekennzeichnet, daß die Reihenfolge der Messungen von Probekopie und Bezugskopie verschieden ist, je nachdem ob die Eichvorlage eine Negativ- oder Positivvorlage ist.

4. Verfahren nach einem der vorhergehenden Ansprüche, dadurch gekennzeichnet, daß die Farbdichten durch Messung des Lichtes bestimmt werden, welches von Meßflächen definierter Größe der Probekopie und der Bezugskopie reflektiert wird.

5. Verfahren nach Anspruch 4, dadurch gekennzeichnet, daß das Verhältnis der wirksamen Meßflächen von Probekopie und Bezugskopie in Abhängigkeit der Steilheit (Gamma-Wert) des verwendeten Kopiermaterials gewählt wird.

6. Verfahren nach Anspruch 5, dadurch gekennzeichnet, daß das Verhältnis der wirksamen Meßflächen von Probekopie und Bezugskopie durch teilweise Überlagerung der beiden in der Meßstellung bestimmt wird.

7. Meßvorrichtung zur Durchführung des Verfahrens nach Anspruch 1, gekennzeichnet durch eine lichtdichte Meßkammer (18) mit einer Aufnahme (20, 24, 25) für eine zu messende Bildkopie, einer Lichtöffnung (10) durch welche die Bildkopie mit Licht aus einem Vergrößerungsgerät beleuchtbar ist und mit fotoelektrischen Wandlern (26, 27, 28), welche von der Bildkopie reflektiertes Meßlicht empfangen und intensitätsproportionale elektrische Signale für jede der Farbkomponenten Rot, Grün und Blau des Meßlichtes erzeugen, wobei die Wandler (26, 27, 28) Teil einer Meß- und Anzeigeschaltung sind, in welcher die Abweichung der Meßwerte einer Probekopie von jenen einer Bezugskopie ermittelt und angezeigt werden.

8. Meßvorrichtung nach Anspruch 7, dadurch gekennzeichnet, daß die Aufnahme für die Bildkopie eine in die Meßkammer (18) einschiebbare Trägerplatte (20) ist, deren dem Licht zugewandte Seite eine Bezugskopie fest aufnimmt.

9. Meßvorrichtung nach Anspruch 8, dadurch gekennzeichnet, daß die Trägerplatte (20) Führungen (24, 25) aufweist, in welche eine zu messende Probekopie in Überlagerung der fest angeordneten Bezugskopie einführbar ist, wobei die Probekopie von außerhalb der Meßkammer (18) über einen Eingabeschlitz (7) auf die Trägerplatte (20) in ihrer Meßstellung bringbar ist.

10. Meßvorrichtung nach Anspruch 9, dadurch gekennzeichnet, daß die Führungen (24, 25) am Träger (20) verstellbare Anschläge aufweisen, mittels welcher eine Probekopie in Position einer teilweisen Überlagerung der Bezugskopie gehalten wird.

11. Meßvorrichtung nach Anspruch 7, dadurch gekennzeichnet, daß an die Lichtöffnung (10) der Meßkammer (18) nach außen ein auswechselbarer Lichtschacht (9) anschließt.

**12.** Meßvorrichtung nach Anspruch 7, dadurch gekennzeichnet, daß die Meß- und Anzeigeschaltung drei in den Farben Rot, Grün und Blau sensibilisierte Meßkanäle umfaßt, von denen jeder eine Anzeigevorrichtung aufweist.

**13.** Meßvorrichtung nach Anspruch 12, dadurch gekennzeichnet, daß die Meß- und Anzeigeschaltung Speichermittel zum gemeinsamen Speichern von Meßwerten aus den drei Meßkanälen aufweist.

**Claims**

**1.** Method for determining the colour composition of the copying light in photographic enlarging or copying machines, having means for adjusting the relative proportions of the primary colours red, green and blue of the copying light with reference to exposure of uniform duration in the primary colours, on the basis of the results obtained with a test copy produced from a calibration master, and with a reference copy that represents a satisfactory image reproduction of the calibration master, characterised in that
- the test copy is produced using copying light having a colour composition that has been set as a test;
- the test copy and the reference copy are exposed to the copying light, which can be adjusted by the adjusting means and which has the colour composition set for the exposure of the test copy, and the light reflected by the test copy and the reference copy is measured selectively in the colours red, green and blue;
- the measured values from one copy are stored and those of the other copy are compared with the stored measured values and any deviation is indicated visually for each colour individually and
- the colour composition of the copying light is readjusted by altering the relative proportions of the primary colours red, green and blue until the indicated deviations have been compensated.

**2.** Method according to claim 1, characterised in that the test copy and the reference copy are measured in successive measurements and the measured values of the first measurement are stored and those of the second measurement are indicated as deviations from the stored values.

**3.** Method according to claim 2, characterised in that the sequence of the measurements of the test copy and the reference copy is different depending on whether the calibration master is a negative or a positive master.

**4.** Method according to any one of the preceding claims, characterised in that the colour densities are determined by measuring the light reflected from measurement areas of defined size on the test copy and on the reference copy.

**5.** Method according to claim 4, characterised in that the ratio of the effective measurement areas of the test copy and the reference copy is selected as a function of the contrastiness (gamma value) of the copying material used.

**6.** Method according to claim 5, characterised in that the ratio of the effective measurement areas of the test copy and the reference copy is determined by a partial overlap of the two in the measurement position.

**7.** Measurement apparatus for carrying out the method according to claim 1, characterised by a light-proof measurement chamber (1 having means (20, 24, 25) for accommodating an image copy to be measured, a light aperture (10) through which the image copy can be exposed to light from an enlarging apparatus, and having photoelectric transducers (26, 27, 28) that receive light to be measured reflected by the image copy and generate intensity-proportional electrical signals for each of the colour components red, green and blue of the measured light, the transducers (26, 27, 28) being part of a measurement and indication circuit in which the deviation of the measured values of a test copy from those of a reference copy are determined and indicated.

**8.** Measurement apparatus according to claim 7, characterised in that the means for accommodating the image copy is a support plate (20) which can be pushed into the measurement chamber (18) and the side of which facing the light accommodates a reference copy securely.

**9.** Measurement apparatus according to claim 8, characterised in that the support plate (20) has guides (24, 25) into which a test copy to be measured can be introduced so that it overlaps the fixed reference copy, it being possible for the test copy to be introduced into its measurement position on the support plate (20) from outside the measurement chamber (18) by way of an inlet slot (7).

10. Measurement apparatus according to claim 9, characterised in that the guides (24, 25) on the support (20) have adjustable stops by means of which a test copy is held in a position in which it partially overlaps the reference copy.

11. Measurement apparatus according to claim 7, characterised in that an exchangeable light guide (9) adjoins the light aperture (10) of the measurement chamber (18) at the outside.

12. Measurement apparatus according to claim 7, characterised in that the measurement and indication circuit comprises three measurement channels sensitised to the colours red, green and blue and each having an indicating device.

13. Measurement apparatus according to claim 12, characterised in that the measurement and indication circuit has storage means for storing together measured values from the three measurement channels.

**Revendications**

1. Procédé de détermination de la composition chromatique de la lumière de tirage dans les agrandisseurs ou copieurs photographiques avec des moyens pour le réglage des proportions relatives des couleurs fondamentales, rouge, vert et bleu, de la lumière de tirage en vue d'une exposition avec un temps d'exposition unitaire dans les couleurs fondamentales, sur la base des résultats de mesure d'une copie d'essai réalisée à partir d'un original d'étalonnage, et d'une copie de référence qui représente une reproduction en image satisfaisante de l'original d'étalonnage, caractérisé en ce que :
   - la copie d'essai est réalisée avec une composition chromatique de la lumière de tirage réglée à titre d'essai ;
   - la copie d'essai et la copie de référence sont éclairées par la lumière de tirage susceptible d'être influencée par les moyens de réglage et ayant la composition chromatique réglée pour l'exposition de la copie d'essai, et la lumière réfléchie par la copie d'essai et la copie de référence est mesurée de manière sélective dans les couleurs rouge, verte et bleue ;

   - les valeurs de mesure d'une copie sont enregistrées et celles de l'autre sont comparées avec les valeurs de mesure enregistrées et un écart existant est indiqué de manière visible séparément pour chaque couleur ; et
   - la composition chromatique de la lumière de tirage est à nouveau réglée par modification des proportions relatives des couleurs fondamentales, rouge, vert et bleu, jusqu'à la compensation des écarts indiqués.

2. Procédé selon la revendication 1, caractérisé en ce que la copie d'essai et la copie de référence sont mesurées au cours de mesures consécutives et en ce que les valeurs de mesure de la première mesure sont enregistrées et celles de la seconde mesure sont indiquées comme des écarts par rapport aux valeurs enregistrées.

3. Procédé selon la revendication 2, caractérisé en ce que l'ordre des mesures de la copie d'essai et de la copie de référence est différent selon que l'original d'étalonnage est un original négatif ou positif.

4. Procédé selon l'une quelconque des revendications précédentes, caractérisé en ce que les densités de couleurs sont déterminées par mesure de la lumière réfléchie par des surfaces de mesure de grandeur définie de la copie d'essai et de la copie de référence.

5. Procédé selon la revendication 4, caractérisé en ce que le rapport entre les surfaces de mesure efficaces de la copie d'essai et de la copie de référence est choisi en fonction de la gradation (valeur gamma) du support de copie utilisé.

6. Procédé selon la revendication 5, caractérisé en ce que le rapport entre les surfaces de mesure de la copie d'essai et de la copie de référence est déterminé par un recouvrement partiel des deux dans la position de mesure.

7. Dispositif de mesure pour la mise en oeuvre du procédé selon la revendication 1, caractérisé en ce qu'il comporte une chambre de mesure (18) étanche à la lumière, avec un dispositif de réception (20, 24, 25) pour une copie d'image à mesurer, une ouverture pour la lumière (10) à travers laquelle la copie d'image peut être éclairée par de la lumière provenant d'un agrandisseur et comportant des convertisseurs photo-électriques (26, 27, 28), qui reçoivent la lumière de mesure réfléchie par la copie d'image et produisent des signaux électriques proportionnels à l'intensité pour chacune des composantes colorées rouge, verte et bleue, les convertisseurs (26, 27, 28) faisant partie d'un circuit de mesure et d'indication dans lequel l'écart des valeurs de mesure d'une copie d'essai par rapport à celles d'une copie de référence est déterminé et indiqué.

8. Dispositif de mesure selon la revendication 7, caractérisé en ce que le dispositif de réception pour la copie d'image est une plaque-support (20) qui peut être insérée dans la chambre de mesure (18), et dont la face tournée vers la lumière reçoit de manière fixe une copie de référence.

9. Dispositif de mesure selon la revendication 8, caractérisé en ce que la plaque-support (20) présente des guides (24, 25) dans lesquels peut être introduite une copie d'essai à mesurer en recouvrement de la copie de référence disposée de manière fixe, la copie d'essai pouvant être amenée de l'extérieur de la chambre de mesure (18) sur la plaque-support (20) dans sa position de mesure par l'intermédiaire d'une fente d'introduction (7).

10. Dispositif de mesure selon la revendication 9, caractérisé en ce que les guides (24, 25) sur le support (20) présentent des butées réglables, au moyen desquelles une copie d'essai est maintenue en position de recouvrement partiel de la copie de référence.

11. Dispositif de mesure selon la revendication 7, caractérisé en ce qu'un puits de lumière (9) interchangeable se raccorde à l'ouverture pour la lumière (10) de la chambre de mesure (18) vers l'extérieur.

12. Dispositif de mesure selon la revendication 7, caractérisé en ce que le circuit de mesure et d'indication comprend trois canaux de mesure sensibilisés aux couleurs rouge, verte et bleue, dont chacun présente un dispositif d'indication.

13. Dispositif de mesure selon la revendication 12, caractérisé en ce que le circuit de mesure et d'indication présente des moyens d'enregistrement pour l'enregistrement commun de valeurs de mesure provenant des trois canaux de mesure.

Fig. 1

Fig. 3

Fig. 2

11